# EUROPEAN PATENT SPECIFICATION

(11) **EP 3 725 607 B1**
(45) Date of publication and mention of the grant of the patent: **18.11.2026**
(21) Application number: 18888774.9
(22) Date of filing: 07.03.2018
(51) Int. Cl.: B60S 5/06, B60K 1/04, F16B 19/02, B60L 53/80, B60L 53/30, B60L 53/35

(54) **POSITIONING MECHANISM AND BATTERY-REPLACING ROBOT HAVING SAME**
POSITIONIERMECHANISMUS UND BATTERIEWECHSELROBOTER DAMIT
MÉCANISME DE POSITIONNEMENT ET ROBOT DE REMPLACEMENT DE BATTERIE LE COMPRENANT

(30) Priority: 15.12.2017 CN 201711353829; 15.12.2017 CN 201721767697 U
(43) Date of publication of application: 21.10.2020
(73) Proprietor: NIO (ANHUI) HOLDING CO., LTD., Hefei City, Anhui Province 230601 (CN)
(72) Inventor: MA, Yongyue, Hong Kong (CN); DING, Xikun, Hong Kong (CN); TIAN, Xiaotao, Hong Kong (CN); LI, Nan, Hong Kong (CN)
(74) Representative: Patentwerk B.V.
(86) International application number: PCT/CN2018/078238
(87) International publication number: WO 2019/114139

(56) References cited:
- EP-A2- 2 540 585
- CN-U- 201 784 595
- CN-U- 201 784 595
- CN-U- 202 071 671
- CN-U- 204 461 383
- CN-U- 205 872 015
- CN-Y- 201 188 435
- JP-A- 2016 137 755
- US-A1- 2010 112 843
- US-A1- 2016 195 380
- US-B1- 8 858 152

## Description

### Technical Field

The invention belongs to the field of positioning apparatuses, and particularly provides a positioning mechanism and a battery swap robot having same.

### Background Art

Vehicles with battery swap from the chassis typically requires the use of a battery swap robot to implement battery swap operations. During a battery swap process, the battery swap robot dismantles a used traction battery from an electric vehicle, transfers the used traction battery to a battery swap station, takes a fresh traction battery out from the battery swap station, and installs the fresh traction battery to the electric vehicle. For example, patent application publication No. CN1 07097762A discloses a battery swap robot which achieves the above functions.

The document EP2540585A2 disclose a battery-swap robot that uses a conveying apparatus with multiple mounts, individual lifting mechanisms and a control unit to precisely attach a battery unit to a vehicle body via coordinated fastening portions and detection-based stopping.

The document US2016195380A1 discloses a positioning device with a driving mechanism for moving a positioning pin.

The document US2010112843A1 discloses a swappable battery with a locking mechanism , activated by a movable pin.

In general, a bearing platform of the battery swap robot is merely provided with a positioning pin, and a battery position of the electric vehicle can be aligned with the bearing platform of the battery swap robot via the positioning pin so that the battery swap robot dismantles the traction battery. However, the positioning pin does not have a positioning effect on the traction battery while the battery swap robot takes the traction battery out from the battery swap station and installs the traction battery to the electric vehicle, as a result of which a bolt on the traction battery cannot be aligned with a bolt hole in the electric vehicle after the bearing platform of the battery swap robot is aligned with the battery position of the electric vehicle.

Accordingly, there is need in the art for a novel battery swap robot to solve the problems.

### Summary of the Invention

In order to solve the above-mentioned problems in the prior art, that is, to solve the problem that bolts on a power battery cannot be aligned with bolt holes on an electric vehicle when installing the power battery on the electric vehicle, the invention provides a battery swap robot as defined in claim 1. Further embodiments are disclosed in the dependent claims.

Those skilled in the art can understand that in the preferred technical solutions of the invention, the positioning mechanism is arranged on the bearing platform of the battery swap robot, and the positioning pins driven by the driving member are configured for the positioning mechanism, such that the positioning pins can extend out automatically when the battery swap robot removes the traction battery from the battery swap station, and the traction battery is accurately placed at a battery position on the bearing platform; and the positioning pins can retract automatically when the battery swap robot installs the traction battery to the electric vehicle. Therefore, the battery swap robot of the invention can ensure that the bolt on the traction battery is aligned with the bolt hole in the electric vehicle when installing the traction battery to the electric vehicle. The invention is defined by the appended claims.

Further, in a preferred embodiment of the invention, the driving member is an electric cylinder, and the electric cylinder simultaneously drives the plurality of positioning pins to slide by the linkage member. One of the positioning pins is provided with a first position sensor and a second position sensor, the first position sensor is used for detecting whether the positioning pin extends out to be in place, and the second position sensor is used for detecting whether the positioning pin retracts to be in place, causing the electric cylinder to stop rotating after the positioning pin moves to be in place.

### Brief Description of the Drawings

The preferred embodiments of the invention are described below with reference to the accompanying drawings, in which:
Fig. 1 is a schematic view of a positioning mechanism of the invention with a first positioning pin in an extended state;
Fig. 2 is a schematic view of the positioning mechanism of the invention in the first positioning pin in a retracted state;
Fig. 3 is a front view of the positioning mechanism of the invention;
Fig. 4 is an enlarged view of a portion A in Fig. 3; and
Fig. 5 is a simple schematic structural view of a battery swap robot of the invention.

### List of reference numerals:

1. Fixed plate; 11. First support; 12. Second support; 2. First positioning pin; 21. Slide groove; 22. Positioning plate; 3. Sliding sleeve; 4. Electric motor; 5. Lead screw assembly; 6. Linkage member; 61. Linkage shaft; 62. First driving arm; 621. Slider; 63. Second driving arm; 7. First position sensor; 8. Second position sensor; 9. Battery swap robot; 91. Bearing platform; 911. Second positioning pin; 92. Lifting mechanism; 93. Traveling mechanism; 10. Traction battery.

### Detailed Description of Embodiments

It should be understood by those skilled in the art that embodiments in this section are merely used to explain the technical principle of the invention and are not intended to limit the protection scope of the invention. For example, a positioning mechanism of the invention can be applied not only to a battery swap robot but also to any other feasible devices such as a battery swap station for an electric vehicle. Those skilled in the art can make amendments to the positioning mechanism to adapt to specific application scenarios, and the amended technical solutions will still fall within the protection scope of the invention.

It should be noted that the terms herein that indicate the direction or positional relationship, such as "center", "upper", "lower", "left", "right", "vertical", "horizontal", "inner" and "outer", are based on the direction or positional relationship shown in the figures, which is merely for ease of description and not to indicate or imply that the device or element must have a particular orientation and be constructed and operated in a particular orientation, and therefore, should not be construed as limiting the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For those skilled in the art, the specific meaning of the above terms in the invention can be interpreted according to the specific situation.

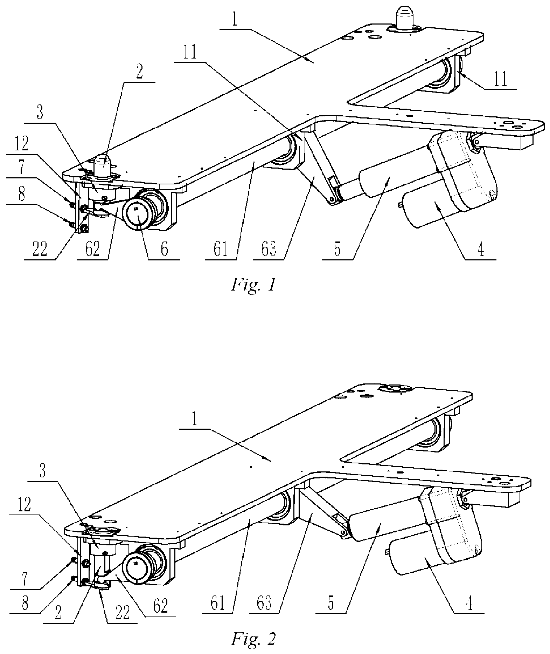

As shown in Figs. 1 to 3, the positioning mechanism of the invention mainly comprises a fixed plate 1, first positioning pins 2, an electric cylinder (4, 5) as a driving member, and a linkage member 6, wherein the fixed plate 1 is used for supporting or fixing the first positioning pins 2, the electric cylinder (4, 5) and the linkage member 6, and the linkage member 6 is used for transmitting a driving force between the positioning pins and the driving member. The first positioning pins 2 are slidably arranged on the fixed plate 1 in its own axial direction. In a preferred technical solution of the invention, a sliding sleeve 3 is fixedly disposed on the fixed plate 1, and the first positioning pins 2 are slidably disposed in the sliding sleeve 3 in its own axial direction, so as to guide the first positioning pins 2 through the sliding sleeve 3 and reduce friction force during the sliding of the first positioning pins 2. Further, the electric cylinder (4, 5) comprises an electric motor 4 and a lead screw assembly 5 which are in driving connection, one end of the electric cylinder (4, 5) is pivotally connected to the fixed plate 1, and the other end of the electric cylinder (4, 5) is pivotally connected to the linkage member 6, and each of two ends of the linkage member 6 is connected to one first positioning pins 2. Alternatively, those skilled in the art may also make the linkage member 6 simultaneously drive any other number of positioning pins 2, such as three, four, five, etc., as needed. When extending or retracting, the electric cylinder (4, 5) can drive two of the first positioning pins 2 to extend or retract synchronously by the linkage member 6. Those skilled in the art can understand that since a lead screw nut pair of the lead screw assembly 5 has a self-locking property, the lead screw assembly 5 can lock the first positioning pins 2 to a current position by the linkage member 6 after the electric motor 4 stops rotating.

It should be noted that since the electric cylinder (4, 5) is a conventional component frequently used by those skilled in the art and the electric cylinder (4, 5) is also readily available in the market, excessive description is no longer made herein on the electric cylinder (4, 5).

Those skilled in the art may understand that the fixed plate 1 may also be substituted by any other feasible fixed member, such as a bracket and a sheet metal member. The electric cylinder (4, 5) may also be substituted by any other feasible driving member, such as an electric push rod, an oil cylinder and an air cylinder.

With continued reference to Figs. 1 to 3, the linkage member 6 of the invention mainly comprises a linkage shaft 61, and a first driving arm 62 and a second driving arm 63 radially disposed along the linkage shaft 61. The linkage shaft 61 is pivotally disposed on a first support 11 of the fixed plate 1 and may be driven by the driving member to rotate around its own axis. Two first driving arms 62 are respectively fixedly disposed at two ends of the linkage shaft 61. The second driving arm 63 is disposed at a middle portion of the linkage shaft 61 and is fixedly connected to the linkage shaft 61. One end, away from the linkage shaft 61, of each first driving arm 62 is connected to a first positioning pin 2. One end, away from the linkage shaft 61, of the second driving arm 63 is pivotally connected to an output end of the lead screw assembly 5.

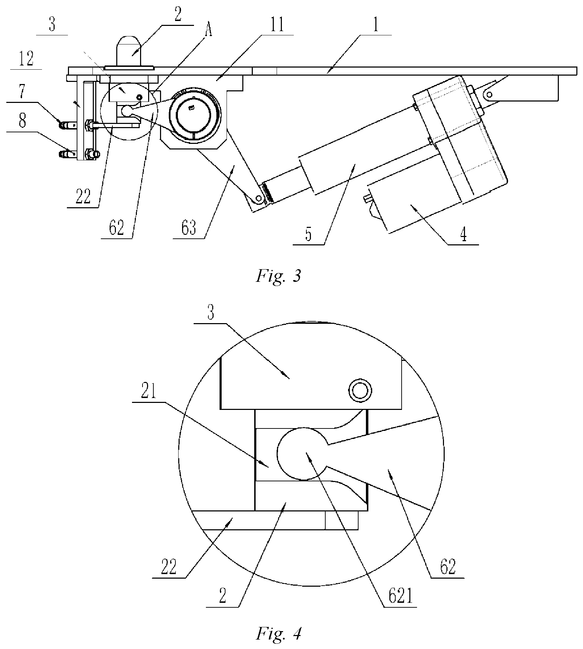

As shown in Figs. 3 and 4, the bottom of the first positioning pin 2 is provided with a slide groove 21 in a radial direction. A slider 621 is provided at one end, away from the linkage shaft 61, of the first driving arm 62, and the slider 621 can slide inside the slide groove 21. As shown in Fig. 3, when the electric cylinder (4, 5) pushes the second driving arm 63, the second driving arm 63 can drive the linkage shaft 61 and the first driving arm 62 to rotate clockwise, and the rotating first driving arm 62 can drive the first positioning pin 2 to move upward by the slider 621, so as to make the first positioning pin 2 extend out. When the electric cylinder (4, 5) pulls the second driving arm 63, the second driving arm 63 can drive the linkage shaft 61 and the first driving arm 62 to rotate counterclockwise, and the rotating first driving arm 62 can drive the first positioning pin 2 to move downward by the slider 621, so that the first positioning pin 2 retracts. It can be seen from Figs. 3 and 4 that the slider 621 slides in the slide groove 21 while driving the first positioning pin 2 to slide up and down. Therefore, the cooperation between the slide groove 21 and the slider 621 can avoid a jam between the first positioning pin 2 and the first driving arm 62 when the first driving arm 62 drives the first positioning pin 2. Those skilled in the art can understand that, on the premise that the slide groove 21 and the slider 621 implement the aforementioned functions, the slide groove 21 also forms any feasible angle with the axis of the first positioning pin 2, such as 30°, 45°, and 60°. The slider 621 may have any feasible shape or structure, such as a circle, an ellipse, and a roller.

As shown in Figs. 1 to 3, a second support 12 is further disposed on the fixed plate 1, and a first position sensor 7 and a second position sensor 8 for detecting a position state of the first positioning pin 2 are installed on the second support 12. As shown in Figs. 1 to 4, the bottom of the first positioning pin 2 is provided with a positioning plate 22. As the first positioning pin 2 moves up and down, the positioning plate 22 is close to the first position sensor 7 and the second position sensor 8. When the positioning plate 22 is close to the first position sensor 7 and the second position sensor 8, the first position sensor 7 and the second position sensor 8 can detect the positioning plate 22 and output a signal to the outside. When a system controller receives the signal, it is determined that the first positioning pin 2 extends or retracts to be in place, causing the electric motor 4 to stop rotating. In a preferred embodiment of the invention, both the first position sensor 7 and the second position sensor 8 are proximity switches, and the positioning plate 22 is a metal block, or those skilled in the art may also properly adjust the first position sensor 7, the second position sensor 8 and the positioning plate 22 as required. For example, the first position sensor 7 and the second position sensor 8 are substituted by a linear position sensor, and the positioning plate 22 is fixedly connected to a movable end of the linear position sensor.

Although not shown in the drawings, in another feasible embodiment of the invention, the first positioning pin 2 may also be directly connected to the electric cylinder (4, 5), such that the first positioning pin 2 is directly driven by the electric cylinder (4, 5). Those skilled in the art can understand that at this time the electric cylinder (4, 5) is disposed at the lower end of the first positioning pin 2 and the axis of the lead screw assembly 5 is parallel to the sliding direction of the first positioning pin 2. In addition, those skilled in the art may also replace the combination of the electric motor 4 and the lead screw assembly 5 with any other feasible driving device, such as a linear motor, an electromagnet, and a lead screw nut pair, as needed. In a further feasible embodiment of the invention, the electric cylinder (4, 5) may be dispensed with, and then the electric motor directly drives the linkage shaft 61 to rotate, and thus drives the first positioning pin 2 to slide by the first driving arm 62.

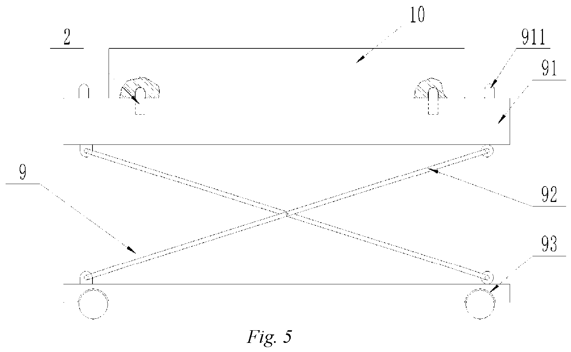

The battery swap robot of the invention will be described below in detail with reference to Fig. 5.

As shown in Fig. 5, the battery swap robot 9 of the invention mainly comprises a bearing platform 91, an lifting mechanism 92 and a traveling mechanism 93. The bearing platform 91 is used to bear a traction battery 10 of an electric vehicle. The lifting mechanism 92 is used to hoist the bearing platform 91. The traveling mechanism 93 is used to drive the battery swap robot 9 to travel.

With continued reference to Fig. 5, the bearing platform 91 mainly comprises a plurality of positioning mechanisms as described above and a plurality of second positioning pins 911. The positioning mechanism is used for positioning the traction battery 10, and the second positioning pin 911 is used to align the bearing platform 91 with the battery swap position of the electric vehicle. In a preferred embodiment of the invention, the fixed plate 1 of the positioning mechanism is disposed or integrally formed on the top of the bearing platform 91, and other members of the positioning mechanism are located in the bearing platform 91 so as to ensure the flatness of the top of the bearing platform 91.

The working principles of the battery swap robot 9 of the invention will be described in detail below. Before this, it should be noted that, in a preferred embodiment of the invention, the first positioning pin 2 is normally in a retracted state, or those skilled in the art may also have the first positioning pin 2 in an extended state under normal conditions, as needed.

When the electric vehicle requires a battery swap, the traveling mechanism 93 first moves the battery swap robot 9 to a position aligned with a battery swap position at the bottom of the electric vehicle, and then the lifting mechanism 92 jacks up the bearing platform 91, until the second positioning pin 911 on the bearing platform 91 is inserted into a positioning hole in the battery position on the electric vehicle. At this time, the battery swap robot 9 removes a used traction battery 10 from the electric vehicle and transfers same into the battery swap station.

After the battery swap robot 9 transfers the used traction battery 10 into the battery swap station, the electric cylinder (4, 5) drives the first positioning pin 2 to extend out. At this time, the bearing platform 91 takes a fresh traction battery 10 out from the battery swap station. During the process of taking out the fresh traction battery 10 by the bearing platform 91, the first positioning pin 2 is inserted into a positioning hole of the traction battery 10 so that the traction battery 10 can be accurately positioned on the bearing platform 91.

Finally, the battery swap robot 9 carries the fresh traction battery 10 to a position aligned with the battery swap position at the bottom of the electric vehicle. Then the lifting mechanism 92 jacks up the bearing platform 91 until the second positioning pin 911 on the bearing platform 91 is inserted into the positioning hole in the battery position on the electric vehicle. It should be noted that the first positioning pin 2 retracts before the second positioning pin 911 is inserted into the positioning hole in the battery position of the electric vehicle, so as to prevent interference between the first positioning pin 2 and the positioning hole in the traction battery 10, between the second positioning pin 911 and the positioning hole of the electric vehicle, and between the bolt on the traction battery 10 and a threaded hole in the electric vehicle when the traction battery 10 is installed to the electric vehicle.

In summary, the battery swap robot 9 of the invention enables the traction battery 10 to be accurately positioned on the bearing platform 91 by the first positioning pin 2, and enables the bearing platform 91 to be aligned with the battery position in the electric vehicle by the second positioning pin 911. The problem that the second positioning pin 91 cannot be inserted into the positioning hole of the electric vehicle, which is caused by improper placement of the traction battery 10 on the bearing platform 91 when the battery swap robot 9 takes the traction battery 10 out from the battery swap station, is solved. Therefore, the battery swap robot 9 of the invention can ensure that the bolt of the traction battery 10 is aligned with the bolt hole of the electric vehicle, so as to ensure that the traction battery 10 can be smoothly installed to the electric vehicle.

Heretofore, the technical solutions of the invention have been described with reference to the preferred embodiments shown in the accompanying drawings.

## Claims

1. A battery swap robot (9), which comprises a bearing platform (91) for bearing a traction battery, the bearing platform (91) comprises a plurality of positioning mechanisms and a plurality of second positioning pins (911) adapted for aligning the bearing platform (91) with the battery position in the electric vehicle,
the positioning mechanism comprises a fixed member (1), and positioning pins (2) adapted for accurately positioning the traction battery on the bearing platform (91) and a driving member (4, 5) arranged on the fixed member (1),
wherein the driving member (4, 5) is in driving connection with the positioning pins (2), and the driving member (4, 5) is used for driving the positioning pins (2) to slide in their own axial directions so that the positioning pins (2) extend out of the fixed member (1) and/or retract into the fixed member (1);
the positioning mechanism further comprises a linkage member (6) for transmitting a driving force between the positioning pins (2) and the driving member (4, 5), and the linkage member (6) has a plurality of output ends which are correspondingly connected to the plurality of positioning pins (2);
the linkage member (6) comprises:
a linkage shaft (61) capable of rotating around its own axis under the driving force of the driving member (4, 5), the axial direction of the linkage shaft (61) and the axial direction of the positioning pin (2) forming an included angle; and
first driving arms (62) extending in a radial direction of the linkage shaft (61), first ends of the first driving arms (62) being fixed to the linkage shaft (61) to swing with the rotation of the linkage shaft (61), and second ends thereof being connected to the positioning pins (2) to drive the positioning pins (2) to slide along their own axes;
the positioning mechanism further comprises slide grooves (21) provided in the positioning pins (2), the second ends of the first driving arms (62) are provided with sliders (621) slidably accommodated in the slide grooves (21), and extension directions of the slide grooves (21) are configured to enable the first driving arms (62) to convert a rotational motion of the linkage shaft (61) into a linear motion of the positioning pins (2) along their own axes.

2. The battery swap robot according to claim 1, **characterized in that** the axial direction of the linkage shaft (61) is perpendicular to the axial directions of the positioning pins (2), and the slide grooves (21) are perpendicular to the axial directions of the positioning pins (2).

3. The battery swap robot according to claim 1, **characterized in that** the first driving arms (62) are respectively disposed at two axial ends of the linkage shaft (61), and each of the first driving arms (62) is correspondingly connected to one of the positioning pins (2).

4. The battery swap robot according to claim 1, **characterized by** further comprising a support (11, 12), the linkage shaft (61) being supported on the fixed member (1) by the support (11, 12).

5. The battery swap robot according to claim 1, **characterized in that** the output motion of the driving member (6) is linear motion or rotational motion;
when the driving member (6) outputs rotational motion, the output end of the driving member (6) is coaxially connected to the linkage shaft (61).

6. The battery swap robot according to claim 1, **characterized in that** the positioning mechanism further comprises a sliding sleeve (3) disposed on the fixed member (1), and the positioning pins (2) are slidably disposed in the sliding sleeve (3).

7. The battery swap robot according to any one of claims 1 to 6, **characterized in that** the positioning mechanism further comprises position sensors (7, 8) arranged on the fixed member (1), and the position sensors (7, 8) are used for detecting position states of the positioning pins (2).

8. The battery swap robot according to claim 7, **characterized in that** the position sensors (7, 8) comprise a first position sensor (7) for detecting an extended state of the positioning pins (2), and a second position sensor (8) for detecting a retracted state of the positioning pins (2).

9. The battery swap robot according to any one of claims 1 to 6, **characterized in that** the driving member (4, 5) is an electric cylinder.

10. The battery swap robot according to claim 1, **characterized in that** the fixed member (1) is disposed on the bearing platform (91) or formed integrally with the bearing platform (91).

## Patentansprüche

1. Batteriewechselroboter (9), der eine Lagerplattform (91) zum Lagern einer Traktionsbatterie umfasst, wobei die Lagerplattform (91) mehrere Positioniermechanismen und mehrere zweite Positionierstifte (911) umfasst, die zum Ausrichten der Lagerplattform (91) mit der Batterieposition in dem Elektrofahrzeug ausgelegt sind,
wobei der Positioniermechanismus ein festes Element (1) und Positionierstifte (2), die zum genauen Positionieren der Traktionsbatterie auf der Lagerplattform (91) ausgelegt sind, und ein Antriebselement (4, 5) umfasst, das an dem festen Element (1) angeordnet ist,
wobei das Antriebselement (4, 5) in Antriebsverbindung mit den Positionierstiften (2) steht und das Antriebselement (4, 5) zum Antreiben der Positionierstifte (2) verwendet wird, so dass sie in ihren eigenen axialen Richtungen so gleiten, dass die Positionierstifte (2) aus dem festen Element (1) ausfahren und/oder in das feste Element (1) einfahren;
wobei der Positioniermechanismus ferner ein Verbindungselement (6) zum Übertragen einer Antriebskraft zwischen den Positionierstiften (2) und dem Antriebselement (4, 5) umfasst und das Verbindungselement (6) mehrere Ausgangsenden aufweist, die entsprechend mit den mehreren Positionierstiften (2) verbunden sind;
wobei das Verbindungselement (6) Folgendes umfasst:
eine Verbindungswelle (61), die sich unter der Antriebskraft des Antriebselements (4, 5) um ihre eigene Achse drehen kann, wobei die axiale Richtung der Verbindungswelle (61) und die axiale Richtung des Positionierstifts (2) einen eingeschlossenen Winkel bilden; und
erste Antriebsarme (62), die sich in einer radialen Richtung der Verbindungswelle (61) erstrecken, wobei erste Enden der ersten Antriebsarme (62) an der Verbindungswelle (61) so fixiert sind, dass sie mit der Drehung der Verbindungswelle (61) schwenken, und wobei zweite Enden davon mit den Positionierstiften (2) verbunden sind, um die Positionierstifte (2) so anzutreiben,
dass sie entlang ihrer eigenen Achsen gleiten;
der Positioniermechanismus ferner in den Positionierstiften (2) bereitgestellte Gleitnuten (21) aufweist, wobei die zweiten Enden der ersten Antriebsarme (62) mit in den Gleitnuten (21) gleitfähig aufgenommenen Gleitstücken (621) versehen sind,
und wobei Ausfahrrichtungen der Gleitnuten (21) so ausgelegt sind, dass ermöglicht wird, dass die ersten Antriebsarme (62) eine Drehbewegung der Verbindungswelle (61) in eine lineare Bewegung der Positionierstifte (2) entlang ihrer eigenen Achsen umwandeln.

2. Batteriewechselroboter nach Anspruch 1, **dadurch gekennzeichnet, dass** die axiale Richtung der Verbindungswelle (61) senkrecht zu den axialen Richtungen der Positionierstifte (2) ist und die Gleitnuten (21) senkrecht zu den axialen Richtungen der Positionierstifte (2) sind.

3. Batteriewechselroboter nach Anspruch 1, **dadurch gekennzeichnet, dass** die ersten Antriebsarme (62) jeweils an zwei axialen Enden der Verbindungswelle (61) angeordnet sind und jeder der ersten Antriebsarme (62) entsprechend mit einem der Positionierstifte (2) verbunden ist.

4. Batteriewechselroboter nach Anspruch 1, **dadurch gekennzeichnet, dass** er ferner eine Stütze (11, 12) umfasst, wobei die Verbindungswelle (61) durch die Stütze (11, 12) an dem festen Element (1) gestützt ist.

5. Batteriewechselroboter nach Anspruch 1, **dadurch gekennzeichnet, dass** die Ausgangsbewegung des Antriebselements (6) eine lineare Bewegung oder eine Drehbewegung ist;
wobei, wenn das Antriebselement (6) eine Drehbewegung ausgibt, das Ausgangsende des Antriebselementes (6) koaxial mit der Verbindungswelle (61) verbunden ist.

6. Batteriewechselroboter nach Anspruch 1, **dadurch gekennzeichnet, dass** der Positioniermechanismus ferner eine Gleithülse (3) umfasst, die an dem festen Element (1) angeordnet ist, und die Positionierstifte (2) gleitfähig in der Gleithülse (3) angeordnet sind.

7. Batteriewechselroboter nach einem der Ansprüche 1 bis 6, **dadurch gekennzeichnet, dass** der Positioniermechanismus ferner Positionssensoren (7, 8) umfasst, die an dem festen Element (1) angeordnet sind, und die Positionssensoren (7, 8) zum Detektieren von Positionszuständen der Positionierstifte (2) verwendet werden.

8. Batteriewechselroboter nach Anspruch 7, **dadurch gekennzeichnet, dass** die Positionssensoren (7, 8) einen ersten Positionssensor (7) zum Detektieren eines ausgefahrenen Zustands der Positionierstifte (2) und einen zweiten Positionssensor (8) zum Detektieren eines eingefahrenen Zustands der Positionierstifte (2) umfassen.

9. Batteriewechselroboter nach einem der Ansprüche 1 bis 6, **dadurch gekennzeichnet, dass** das Antriebselement (4, 5) ein elektrischer Zylinder ist.

10. Batteriewechselroboter nach Anspruch 1, **dadurch gekennzeichnet, dass** das feste Element (1) an der Lagerplattform (91) angeordnet oder integral mit der Lagerplattform (91) ausgebildet ist.

## Revendications

1. Robot d'échange de batteries (9), qui comprend une plate-forme porteuse (91) pour porter une batterie de traction, la plate-forme porteuse (91) comprend une pluralité de mécanismes de positionnement et une pluralité de seconds goujons de positionnement (911) adaptés pour aligner la plate-forme porteuse (91) avec la position de la batterie dans le véhicule électrique,
le mécanisme de positionnement comprend un élément fixe (1), et des goujons de positionnement (2) adaptés pour positionner exactement la batterie de traction sur la plate-forme porteuse (91) et un élément d'entraînement (4, 5) agencé sur l'élément fixe (1),
dans lequel l'élément d'entraînement (4, 5) est en liaison d'entraînement avec les goujons de positionnement (2), et l'élément d'entraînement (4, 5) est utilisé pour entraîner les goujons de positionnement (2) pour qu'ils coulissent dans leurs propres directions axiales de telle sorte que les goujons de positionnement (2) s'étendent hors de l'élément fixe (1) et/ou se rétractent dans l'élément fixe (1) ;
le mécanisme de positionnement comprend en outre un élément de liaison (6) pour transmettre une force d'entraînement entre les goujons de positionnement (2) et l'élément d'entraînement (4, 5), et l'élément de liaison (6) a une pluralité d'extrémités de sortie qui sont reliées de façon correspondante à la pluralité de goujons de positionnement (2) ;
l'élément de liaison (6) comprend :
un arbre de liaison (61) capable d'entrer en rotation autour de son propre axe sous la force d'entraînement de l'élément d'entraînement (4, 5), la direction axiale de l'arbre de liaison (61) et la direction axiale du goujon de positionnement (2) formant un angle inclus ; et
des premiers bras d'entraînement (62) s'étendant dans une direction radiale de l'arbre de liaison (61), des premières extrémités des premiers bras d'entraînement (62) étant fixées à l'arbre de liaison (61) pour pivoter avec la rotation de l'arbre de liaison (61), et des secondes extrémités de ceux-ci étant reliées aux goujons de positionnement (2) pour entraîner les goujons de positionnement (2) pour qu'ils coulissent le long de leurs propres axes ;
le mécanisme de positionnement comprend en outre des rainures de coulissement (21) prévues dans les goujons de positionnement (2), les secondes extrémités des premiers bras d'entraînement (62) sont pourvues de coulisseaux (621) logés de façon coulissante dans les rainures de coulissement (21), et des directions d'extension des rainures de coulissement (21) sont configurées pour permettre aux premiers bras d'entraînement (62) de convertir un mouvement de rotation de l'arbre de liaison (61) en un mouvement linéaire des goujons de positionnement (2) le long de leurs propres axes.

2. Robot d'échange de batteries selon la revendication 1, **caractérisé en ce que** la direction axiale de l'arbre de liaison (61) est perpendiculaire aux directions axiales des goujons de positionnement (2), et les rainures de coulissement (21) sont perpendiculaires aux directions axiales des goujons de positionnement (2).

3. Robot d'échange de batteries selon la revendication 1, **caractérisé en ce que** les premiers bras d'entraînement (62) sont respectivement disposés au niveau de deux extrémités axiales de l'arbre de liaison (61), et chacun des premiers bras d'entraînement (62) est relié de façon correspondante à un des goujons de positionnement (2).

4. Robot d'échange de batteries selon la revendication 1, **caractérisé en ce qu'**il comprend en outre un support (11, 12), l'arbre de liaison (61) étant supporté sur l'élément fixe (1) par le support (11, 12).

5. Robot d'échange de batteries selon la revendication 1, **caractérisé en ce que** le mouvement de sortie de l'élément d'entraînement (6) est un mouvement linéaire ou mouvement de rotation ;
lorsque l'élément d'entraînement (6) produit en sortie un mouvement de rotation, l'extrémité de sortie de l'élément d'entraînement (6) est reliée de façon coaxiale à l'arbre de liaison (61).

6. Robot d'échange de batteries selon la revendication 1, **caractérisé en ce que** le mécanisme de positionnement comprend en outre un manchon coulissant (3) disposé sur l'élément fixe (1), et les goujons de positionnement (2) sont disposés de façon coulissante dans le manchon coulissant (3).

7. Robot d'échange de batteries selon l'une quelconque des revendications 1 à 6, **caractérisé en ce que** le mécanisme de positionnement comprend en outre des capteurs de position (7, 8) agencés sur l'élément fixe (1), et les capteurs de position (7, 8) sont utilisés pour détecter des états de position des goujons de positionnement (2).

8. Robot d'échange de batteries selon la revendication 7, **caractérisé en ce que** les capteurs de position (7, 8) comprennent un premier capteur de position (7) pour détecter un état étendu des goujons de positionnement (2), et un second capteur de position (8) pour détecter un état rétracté des goujons de positionnement (2).

9. Robot d'échange de batteries selon l'une quelconque des revendications 1 à 6, **caractérisé en ce que** l'élément d'entraînement (4, 5) est un vérin électrique.

10. Robot d'échange de batteries selon la revendication 1, **caractérisé en ce que** l'élément fixe (1) est disposé sur la plate-forme porteuse (91) ou formé de façon monobloc avec la plate-forme porteuse (91).
